# EUROPÄISCHE PATENTANMELDUNG

(11) **EP 2 218 845 A2**
(43) Veröffentlichungstag der Anmeldung: **18.08.2010**
(21) Anmeldenummer: 10001348.1
(22) Anmeldetag: 10.02.2010
(51) Int. Cl.: E04D 13/18, F24J 2/52

(54) **Profilanordnung, System mit mindestens einer Profilanordnung**

(30) Priorität: 17.02.2009 DE 102009009219
(71) Anmelder: 3A Technology & Management AG, 8212 Neuhausen am Rheinfall (CH)
(72) Erfinder: Rothe, Jan, 8246 Langwiesen (DE); Bergmann, Günter, 88453 Erolzheim (DE); Goeltenbott, Frieder, 79639 Grenzach-Wyhlen (DE)

(57) **Zusammenfassung**

Die Erfindung betrifft eine Profilanordnung, umfassend mindestens zwei Profile (4) mit jeweils mindestens einem eine Zulauföffnung (7) und eine Auslassöffnung (8) aufweisenden Rohrabschnitt (5) und jeweils mindestens einem Flachabschnitt (6), wobei die Eingangsöffnungen an eine Zulaufsammelleitung (9) und die Auslassöffnungen (8) an eine Auslasssammelleitung (10) angeschlossen sind. Erfindungsgemäß ist vorgesehen, dass die Profilanordnung als Modulelement (1) mit einem die Profile (4) tragenden Halterahmen (2) ausgebildet ist.

## Beschreibung

Die Erfindung betrifft eine Profilanordnung, umfassend mindestens zwei Profile mit jeweils mindestens einem eine Zulauföffnung und eine Auslassöffnung aufweisenden Rohrabschnitt und jeweils mindestens einem Flachabschnitt, wobei die Eingangsöffnungen an eine (gemeinsame) Zulaufsammelleitung und die Auslassöffnungen an eine (gemeinsame) Auslasssammelleitung angeschlossen sind. Ferner betrifft die Erfindung ein System, umfassend mindestens eine solche Profilanordnung.

Aus der DE 20 2007 008 488 U1 und der WO 2008/151783 A1 sind Leichtmetallwerkstoffprofile zum Aufbau einer selbsttragenden Profilstruktur bekannt. Die Profile umfassen jeweils mindestens einen Rohrabschnitt, wobei sich zu beiden Längsseiten eines derartigen Rohrabschnittes jeweils ein Flachabschnitt (Flächenabschnitt, Plattenabschnitt) erstreckt. Die Flachabschnitte wiederum stützen sich über Fußprofile (Fußabschnitte) an einer Abstützfläche, beispielsweise einer Dachplatte oder einer Außenfläche eines Gebäudes ab. Die Rohrabschnitte der zu einer selbsttragenden Profilstruktur zusammengesetzten Profile sind einenends an eine Zulaufsammelleitung und anderenends an eine Auslasssammelleitung angeschlossen. Nachteilig bei der bekannten Profilanordnung ist die vergleichsweise aufwändige Montage, da zunächst beispielsweise auf einer Baustelle einzelne Profile zusammengesetzt und dann an eine Zulaufsammelleitung sowie eine Auslasssammelleitung angeschlossen werden müssen.

Der Erfindung liegt daher die Aufgabe zugrunde, eine auf einfache Weise montierbare, flexibel einsetzbare Profilanordnung anzugeben, deren Montageaufwand minimiert ist. Ferner besteht die Aufgabe darin, ein System, umfassend mindestens eine derartige Profilanordnung, vorzugsweise mehrere derartige Profilanordnungen, anzugeben.

Diese Aufgabe wird hinsichtlich der Profilanordnung mit den Merkmalen des Anspruchs 1 und hinsichtlich des Systems mit den Merkmalen des Anspruchs 14 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, die Profilanordnung, umfassend mindestens zwei jeweils einen Rohrabschnitt und jeweils einen Flachabschnitt aufweisende Profile als Modulelement auszubilden, also die mindestens zwei Profile zu einer Baueinheit zusammenzufassen. Dies erreicht die Erfindung durch die Anordnung der mindestens zwei Profile in und/oder an einem Halterahmen, welcher vorzugsweise die Befestigungsfunktion für die Profile übernimmt. Dies ermöglicht zum einen eine erleichterte Montage der Profile durch Montieren von mehrere Profile umfassenden Modulelementen und ermöglicht zudem - bei Bedarf - eine einfachere Ausbildung der einzelnen Profile. Diese können, was einer bevorzugten, später noch zu erläuternden Ausführungsform entspricht, bei Bedarf fußprofilfrei ausgebildet werden, da die Profile, vorzugsweise ausschließlich an ihren axialen Enden, insbesondere an axialen Rohrabschnittsfortsätzen, über den Halterahmen an einer Trägerstruktur fixiert werden können und sich nicht unmittelbar selbst senkrecht zu ihrer Längserstreckung an einer Trägerstruktur abstützen müssen, wie dies im eingangs erwähnten Stand der Technik vorgesehen ist. Besonders zweckmäßig ist es, die Profile eines Modulelementes in einer gemeinsamen Ebene anzuordnen, wobei es noch weiter bevorzugt ist, die Rohrabschnitte der unterschiedlichen Profile zu parallelisieren, um den Anschluss der Rohrabschnitte, genauer der Zulauföffnungen und der Auslauföffnungen, an die (gemeinsame) Zulaufsammelleitung und an die (gemeinsame) Auslasssammelleitung zu vereinfachen.

In Weiterbildung der Erfindung ist mit Vorteil vorgesehen, dass die vorerwähnten, mindestens einen Flachabschnitt und mindestens einen Rohrabschnitt umfassenden Profile aus einem Leichtmetallwerkstoff, vorzugsweise aus einer Aluminiumlegierung, ausgebildet sind. Noch weiter bevorzugt handelt es sich bei den Profilen um Strangpressprofile. Besonders zweckmäßig ist es, wenn der Halterahmen, wie zuvor bereits angedeutet, ebenfalls aus Profilen, nämlich aus Rahmenprofilen, aufgebaut ist, wobei diese Rahmenprofile wiederum bevorzugt ebenfalls aus einem Leichtmetallwerkstoff, insbesondere einer Aluminiumlegierung, vorzugsweise als Strangpressprofile, ausgebildet sind.

Im Hinblick auf die Gestaltung der Profile des Modulelementes gibt es unterschiedliche Möglichkeiten. Besonders bevorzugt ist eine Ausführungsform, bei der die Profile finnenartig ausgebildet sind, also nicht nur einen Flachabschnitt (Flächenabschnitt, Plattenabschnitt) aufweisen, sondern zwei Flachabschnitte, die sich weiter bevorzugt in zwei einander entgegengesetzte Richtungen ausgehend von dem Rohrabschnitt sowie entlang des Rohrabschnittes erstrecken. Dabei können die Flachabschnitte, wie später noch erläutert werden wird, auch einen gemeinsamen Flachabschnitt bzw. eine gemeinsame Auflageebene bilden - eine derartige Ausführungsform ist insbesondere dann von Vorteil, wenn die Flachabschnitte eine Art Trägerebene für Photovoltaikzellen bilden sollen. Durch das Vorsehen zweier, vorzugsweise einen gemeinsamen Flachabschnitt bzw. eine gemeinsame Auflageebene bildenden, Flachabschnitte kann eine optimale Wärmeeinleitung in den zugehörigen Rohrabschnitt und damit in die den Rohrabschnitt durchströmende Flüssigkeit gewährleistet werden. Optimal ist eine Ausführungsform der Profile, bei der diese zwei spiegelsymmetrisch zu einer eine Rohrabschnittslängsmittelachse schneidenden Ebene angeordnete Flachabschnitte umfassen, wobei die Flachabschnitte je nach Anordnung des jeweiligen Rohrabschnittes eine gemeinsame Ebene oder eine von dem Rohrabschnitt unterbrochene Ebene bilden können.

Wie eingangs bereits angedeutet, ermöglicht das Zusammenfassen mehrerer Profile zu einem einen Halterahmen umfassendes Modulelement eine bevorzugte Ausführungsform, bei der die Profile fußabschnittsfrei sind, also im Wesentlichen nur aus mindestens einem Rohrabschnitt und mindestens einem Flachabschnitt, vorzugsweise zwei Flachabschnitten, bestehen. Dabei können die Flachabschnitte flügelartig von einer gedachten, die Rohrabschnittslängsmittelsachse schneidenden Ebene abstehend angeordnet werden. Bevorzugt ist der Rohrabschnitt im Querschnitt kreisförmig konturiert, wobei auch eine ovale oder vieleckige Konturierung denkbar ist.

Besonders zweckmäßig ist eine Ausführungsform des Modulelementes, bei der unterhalb der Profile innerhalb des Halterahmens Wärmedämmmaterial, beispielsweise Steinwolle, angeordnet ist, um einen (unkontrollierten) Wärmeverlust aus dem Modulelement weitgehend zu vermeiden.

Ein wie zuvor beschrieben ausgebildetes Modulelement kann unterschiedliche Funktionen haben. So kann das Modulelement beispielsweise als reines Solarthermie-Modulelement dienen, also zur Aufnahme von Wärmeenergie aus Sonnenstrahlung und Weitergabe dieser Wärmeenergie an ein die Rohrabschnitte durchströmendes Medium. Auch ist eine Ausführungsform des Modulelementes als Photovoltaikmodulelement denkbar, bei dem die Profile, vorzugsweise auf ihren Flachabschnitten, Photovoltaikzellen tragen, wobei es bei der letztgenannten Ausführungsform besonders bevorzugt ist, wenn durch die Rohrabschnitte ein Kühlfluid zum gezielten Kühlen der Photovoltaikzellen transportiert wird.

Insbesondere für den Fall der Ausbildung des Modulelementes als Solarthermie-Modulelement ist es bevorzugt, die Profile mit mindestens einer, vorzugsweise ausschließlich einer, wärmeabsorbierenden Schicht zu beschichten. Bevorzugt ist zumindest eine Profiloberseite, vorzugsweise ausschließlich die Profiloberseite, also die der Sonne zugewandte Seite der Profile mit einer Wärmestrahlungsabsorptionsschicht versehen. Die Wärmestrahlungsabsorptionsschicht kann im Falle von Modulelementen aus Aluminium eine anodische Oxidation erzeugte Oxydschicht sein. Die Oxydschicht kann eingefärbt sein. Wärmestrahlungsabsorptionsschicht kann auch eine Lackschicht sein. Geeignete Lackschichten können durch Sol-Gel-Verfahren auf der Oberfläche der Modulelemente aufgetragen werden. Durch ein Sol-Gel-Verfahren können beispielsweise sog. Ormocere aufgetragen werden. Schichten aus Ormoceren sind beispielsweise siliziumoxidhaltige Schichten und werden z.B. in der EP 0358011 beschrieben. Die Schichten sind erhältlich durch eine hydrolytische Vorkondensation von organofunktionellen Silanen mit Aluminiumverbindungen und ggf. einem oder mehreren schwerflüchtigen Oxyden, die in einer wasserdampfhaltigen Atmosphäre weiter kondensiert und gehärtet werden. Weitere geeignete Wärmestrahlungsabsorptionsschichten oder Schutzschichten zum Schutz von Wärmestrahlungsabsorptionsschichten sind beispielsweise durch physikalische Abscheidung im Vakuum erzeugte Aluminiumoxid- oder Siliciumoxid-Schichten. Zwei oder mehrere Schichten der genannten oder weiterer Schichten können in Kombination, übereinander liegend, angewendet werden.

Besonders zweckmäßig ist eine Ausführungsform des Modulelementes, bei der die Profile relativ zu dem Halterahmen verschwenkbar angeordnet sind, wobei es noch weiter bevorzugt ist, den Profilen zu Verschwenkungszwecken einen Verschwenkantrieb zuzuordnen, mittels dem die Profile, vorzugsweise um eine Längsmittelachse des jeweiligen Rohrabschnittes, verschwenkbar sind, insbesondere mit dem Ziel, dem Verlauf der Sonne folgen zu können, um den Einstrahlungswinkel zu optimieren.

Um dies zu erreichen, ist es besonders bevorzugt, wenn dem vorerwähnten Schwenkantrieb eine Steuereinrichtung zugeordnet ist, die den Schwenkantrieb in Abhängigkeit des Sonnenstandes ansteuernd ausgebildet ist. Der Sonnenstand kann mit an sich bekannten, mit der Steuereinrichtung verbundenen Sensoren erfasst werden.

Insbesondere für den Fall der Ausbildung des Modulelementes als Solarthermie-Modulelement ist es bevorzugt, oberhalb der Profile eine, vorzugsweise von dem Halterahmen getragene, für Sonnenlicht transparente Abdeckung vorzusehen. Dabei ist es besonders bevorzugt, wenn es sich bei der Abdeckung um ein vergleichsweise starres, plattenförmiges Element, insbesondere eine Glasscheibe, handelt, wobei auch Kunststoffausführungen, insbesondere Kunststofffolien, realisierbar sind. Eine Glasscheibe ist jedoch im Hinblick auf die optimale Reinigbarkeit und beständig gegenüber Umwelteinflüssen bevorzugt.

Wie bereits angedeutet, ist eine Ausführungsform des Modulelementes realisierbar, bei der eine Oberseite der Flachabschnitte der Profile eine photovoltaische Zelle trägt. Dabei kann die photovoltaische Zelle entweder unmittelbar auf mindestens einem Flachabschnitt angeordnet sein oder auf mindestens einer auf den Flachabschnitten aufsitzenden Zwischenschicht.

Um die in dem Modulelement anfallende Wärme abtransportieren zu können oder, wie später noch erläutert werden wird, insbesondere im Winter, das Modulelement, vorzugsweise zu Abtauzwecken, erwärmen zu können, ist es bevorzugt, wenn die Rohrabschnitte der Profile des Modulelementes fluiddurchströmt sind. Bevorzugt handelt es sich dabei um ein mit Frostschutzmittel versetztes Fluid, um ein Einfrieren während kalter Jahreszeiten zu vermeiden.

Insbesondere für den Fall, dass die Profile Träger von photovoltaischen Zellen sind, ist es bevorzugt, wenn sich der Rohrabschnitt vollständig unterhalb des mindestens einen Flachabschnittes angeordnet ist. Besonders bevorzugt befindet sich der Rohrabschnitt hierbei unterhalb eines gemeinsamen, von zwei Flachabschnitten gebildeten Flachabschnittes, so dass eine möglichst große Auflageebene für die photovoltaischen Zellen bereitgestellt wird. Es ist jedoch auch eine Ausführungsform realisierbar, insbesondere für den Fall der Ausbildung des Modulelementes als Solarthermie-Modulelement, bei der der Flachabschnitt von einem Bogenabschnitt des Rohrabschnittes überragt ist.

Die Erfindung führt auch auf ein System, umfassend mindestens eine als Modulelement ausgebildete Profilanordnung, wobei das Modulelement an einer Trägerstruktur, vorzugsweise lösbar, festgelegt ist.

In Weiterbildung der Erfindung ist mit Vorteil vorgesehen, dass die Trägerstruktur auf einem Gebäudedach, insbesondere auf einem Dachsparren, oder an einer Gebäudewand, angeordnet bzw. festgelegt ist. Die Trägerstruktur wird weiter bevorzugt gebildet von Profilen, insbesondere Strangpressprofilen aus einem Leichtmetallwerkstoff, vorzugsweise einer Aluminiumlegierung. Dabei wirkt die Trägerstruktur vorzugsweise derart mit den Modulelementen zusammen, dass die Modulelemente in die Trägerstruktur eingesetzt werden können, vorzugsweise ohne die Notwendigkeit, zusätzliche, separate Befestigungsmittel wie Schrauben, etc. vorsehen zu müssen. Hierzu kann die Trägerstruktur beispielsweise eine Ausnehmung aufweisen, die derart konturiert ist, dass die Modulelemente nach deren Einsetzen in die entsprechende Ausnehmung schwerkraftbedingt in eine Fixierposition rutschen, aus der sie entgegen der Schwerkraft zu Demontagezwecken herausgeschoben werden müssten. Besonders bevorzugt ist es, wenn die Profile der Trägerstruktur einen, zwei benachbarte Modulelemente voneinander trennenden Mittelsteg aufweisen, wobei auf den Mittelsteg bei Bedarf eine Art Überdeckungsabschnitt (Dachprofil) aufsetzbar ist, der, zumindest weitgehend, Feuchtigkeit, insbesondere Regen- oder Tauwasser, von der eigentlichen Trägerstruktur fernhält. Um ein optimales Ableiten von Regenwasser, Tauwasser, etc. zu gewährleisten, ist es besonders bevorzugt, wenn die Profile der Trägerstruktur in der Art einer Rinne ausgebildet sind.

Wie in der vorangehenden Beschreibung an unterschiedlichen Stellen bereits angedeutet, gibt es eine Vielzahl von Einsatzmöglichkeiten von nach dem Konzept der Erfindung ausgebildeten Modulelementen. Dabei können die fluiddurchströmten Rohrabschnitte der Profile der Modulelemente entweder zum Abführen von (überschüssiger) Wärme dienen oder zum Zuführen von Wärme zu den Modulelementen, beispielsweise zu Abtauzwecken im Winter. Das vorzugsweise mehrere Modulelemente umfassende System ist bevorzugt derart ausgebildet, dass die Auslasssammelleitung mindestens eines Modulelementes, vorzugsweise mehrere Auslasssammelleitungen mehrerer Modulelemente, zu einer Wärmesenke führen, also zu einem Wärmeabgabebereich. Diese Wärmesenke kann beispielsweise von einem Heizungssystem, also beispielsweise einer Fußbodenheizung und/oder Heizkörpern innerhalb eines Gebäudes, gebildet werden. Je nach Vorlauftemperatur des über die Auslasssammelleitungen abströmenden Fluids kann eine Wärmepumpe vorgesehen werden. Zusätzlich oder alternativ ist es möglich, die mindestens eine Auslasssammelleitung mit einem Warmwassererzeuger zu verbinden, um Trinkwasser und/oder Nutzwasser durch Wärmeabgabe zu erwärmen. Ganz besonders bevorzugt ist eine Ausführungsform des Systems, bei der die mindestens eine Auslasssammelleitung hydraulisch mit Wärmeabgabemitteln verbunden ist, die, zumindest abschnittsweise, vorzugsweise vollständig, im Erdboden eingelassen sind. Hierdurch kann, insbesondere während der Sommermonate, der Erdboden als Wärmespeicher "aufgeladen" werden bzw. das Erdreich regeneriert werden, wenn im Winter dem Erdboden, insbesondere zu Heizzwecken und/oder zur Warmwassererzeugung, Wärme entzogen wird. Dieses Entziehen von Wärme im Winter kann über die Wärmeabgabemittel (Wärmetauscher) erfolgen, über die während des Sommers ein Wärmeeintrag in das Erdreich sichergestellt wird. Über die Wärmeabgabe in das Erdreich oder einen sonstigen Verbraucher, beispielsweise Heizkörper, Fußbodenheizung, Warmwassererzeuger, etc. wird das die Rohrabschnitte durchströmende Fluid herabgekühlt und kann somit für den Fall der Ausbildung mindestens eines Modulelementes als Photovoltaikmodulelement die photovoltaischen Zellen dieses Modulelementes kühlen. Eine derartige Kühlfunktion kann auch dadurch bereitgestellt werden, wenn beispielsweise auf der Norddachseite Wärmeabgabemittel, beispielsweise in Form von Modulelementen, vorgesehen sind, wobei diese Wärmeabgabemodulelemente bevorzugt einen Halterahmen sowie darin bzw. daran angeordnete Profile mit jeweils mindestens einem Flachabschnitt und einem Rohrabschnitt umfassen. Auch ist es möglich, in das System eine Absorptionskälteeinrichtung zu integrieren bzw. das System als Absorptionskälteeinrichtung auszubilden. Dabei kann die über die Auslasssammelleitung(en) abgeführte Wärme zum Verdampfen von Kältemittel eine Absorptionskälteeinrichtung genutzt werden.

Wie bereits angedeutet, ist es möglich, die Modulelemente des Systems, beispielsweise kurzzeitig zu Abtauzwecken, zu erwärmen, wobei in diesem Fall die Zulaufsammelleitungen der Modulelemente des Systems an eine Wärmequelle angebunden sind, wobei die Wärmequelle beispielsweise von im Erdboden angeordneten Wärmeaufnahmemitteln gebildet sein kann, wobei es besonders bevorzugt ist, wenn die Wärmeaufnahmemittel gleichzeitig Wärmeabgabemittel zur Regeneration des Bodens im Sommer bilden.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: eine perspektivische Darstellung einer mög- lichen Ausführungsform eines als Solarther- mie-Modulelement ausgebildetes Modulelemen- tes,
- Fig. 2a und Fig. 2b:: unterschiedliche Ansichten einer alternati- ven Ausführungsform eines Modulelementes,
- Fig. 3:: eine Ausführungsform des Modulelementes 1 als Photovoltaikmodulelement,
- Fig. 4a bis Fig. 4c:: eine weitere Ausführungsform einer möglichen Ausführungsform eines unvollständig darge- stellten Modulelementes,
- Fig. 5a und Fig. 5b:: unterschiedliche Ansichten eines Leichtme- tallwerkstoff-Profils,
- Fig. 6a und Fig. 6b:: eine alternative Ausführungsform eines der- artigen Profils für ein Modulelement,
- Fig. 7a und Fig. 7b:: unterschiedliche Ansichten eines Profils ei- ner Trägerstruktur zum Halten von Modulele- menten,
- Fig. 8a und Fig. 8b:: eine alternative Ausführungsform eines Pro- fils einer Trägerstruktur für Modulelemente, und
- Fig. 9:: die Darstellung einer möglichen Ausführungs- form eines Systems, umfassend eine Vielzahl von Modulelementen.

In den Figuren sind gleiche Elemente und Elemente mit der gleichen Funktion mit den gleichen Bezugszeichen gekennzeichnet.

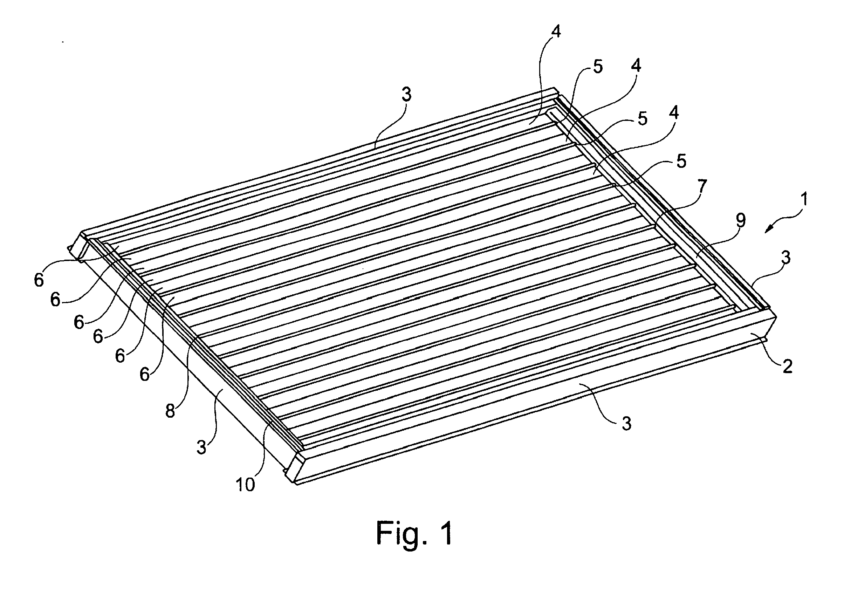

Fig. 1 zeigt eine als Modulelement 1 ausgebildete Profilanordnung. Das Modulelement 1 umfasst einen rechteckigen Halterahmen 2, der zusammengesetzt ist aus vier Rahmenprofilen 3, wobei die Rahmenprofile 3 als Aluminium-Strangpressprofile ausgebildet sind.

Innerhalb des Halterahmens 2 ist in dem gezeigten Ausführungsbeispiel eine Vielzahl von finnenartig ausgebildeten Profilen 4 angeordnet, wobei die Profile 4 parallel ausgerichtet sind und jeweils einen zentralen Rohrabschnitt 5 sowie seitlich der Rohrabschnitte 5 angeordnete Flachabschnitte 6 umfassen. Bei den Flachabschnitten 6 handelt es sich um rechteckige, plattenförmige, flächige sowie dünne Profilabschnitte, die einstückig mit dem Rohrabschnitt 5 ausgebildet sind und die sich entlang des Rohrabschnittes 5 sowie seitlich von diesem, quer zu dessen Längserstreckung weg erstrecken. Zu erkennen ist, dass die Rohrabschnitte 5, genauer deren nicht eingezeichnete Längsmittelachsen, parallel zueinander ausgerichtet sind. Jeder Rohrabschnitt 5 jedes Profils 4 weist eine endseitige Zulauföffnung 7 und eine davon abgewandte Auslassöffnung 8 auf, wobei je nach Fluidbeschickungsrichtung die Zulauföffnung 7 und die Auslassöffnung 8 im Betrieb eines Modulelementes 1 funktional vertauschbar sind. Sämtliche Zulauföffnungen 7 münden in eine sich quer zu den Profilen 4 erstreckende Zulaufsammelleitung 9 und sämtliche Auslassöffnungen 8 münden in eine parallel zur zulaufsammelleitung 9 verlaufende Auslasssammelleitung 10. Die Zulaufsammelleitungen 9 mehrerer Modulelemente 1 können bei Bedarf zusammengefasst werden, d.h. fluidisch miteinander verbunden werden, ebenso wie die Auslasssammelleitungen 10 der Modulelemente 1.

In dem gezeigten Ausführungsbeispiel sind die Profile 4 über die Zulaufsammelleitung 9 und die Auslasssammelleitung 10 mit parallelen Rahmenprofilen 3 des Halterahmens 2 verbunden. Anders ausgedrückt sind die Profile 4 über die Zulaufsammelleitung 9 und die Auslasssammelleitung 10 innerhalb des bzw. an dem Halterahmen 2 gehalten. Zu erkennen ist, dass die Profile 3 in einer gemeinsamen, gedachten Profilebene liegen. In dem gezeigten Ausführungsbeispiel sind die zulaufsammelleitung 9 und die Auslasssammelleitung 10 rechteckig konturiert, wobei auch eine im Querschnitt runde Ausführungsform denkbar ist, oder eine Ausführungsform, bei der innerhalb eines äußeren Rechteckprofils ein innerer, insbesondere kreisrund konturierter, Sammelleitungsabschnitt aufgenommen ist.

Über das in Fig. 1 nicht dargestellte Befestigungsmittel, vorzugsweise in Form von Fortsätzen aufweisenden Halterahmen 2, kann das Modulelement 1 an einer nicht dargestellten Trägerstruktur festgelegt werden.

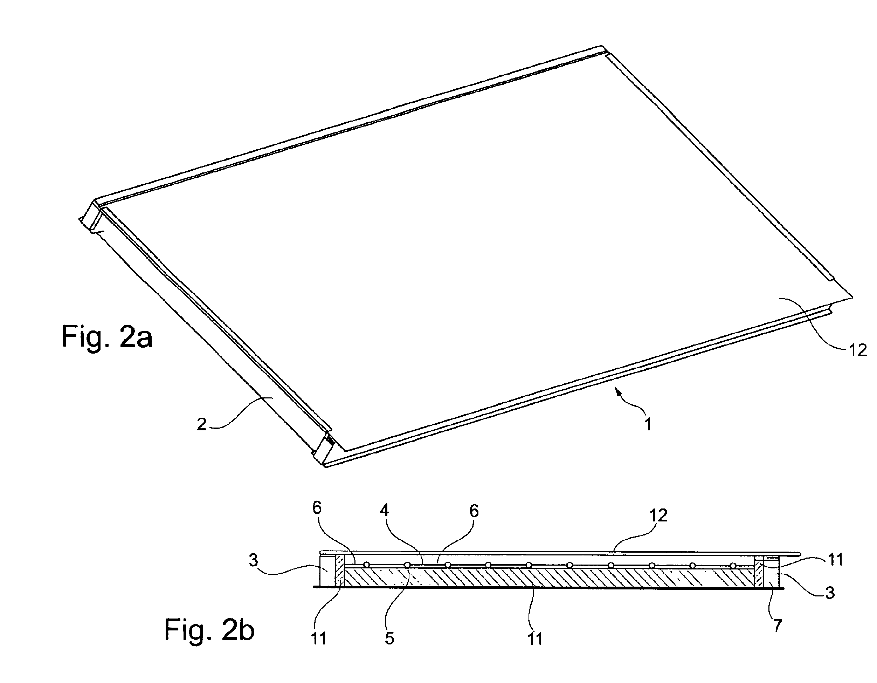

Das Modulelement 1 kann in der in Fig. 1 dargestellten Grundkonfiguration genutzt werden. Bevorzugt ist für den Fall der Ausbildung des Modulelementes 1 als Solarthermie-Modulelement eine Ausführungsform, bei der oberhalb der Profile 4, wie in den Fig. 2a und 2b dargestellt, eine transparente Abdeckung, hier einer Glasscheibe, angeordnet ist. Zusätzlich oder alternativ ist es bevorzugt, zumindest die dieser Abdeckung zugewandte Oberseite der Profile 4 mit einer Wärmeabsorptionsschicht zu beschichten.

Für den Fall, dass das Modulelement 1 zur Abgabe von Wärmeenergie eingesetzt werden soll, insbesondere um gekühlte zu Kühlzwecken einsetzbare Flüssigkeit zu erhalten, wird bevorzugt auf eine Abdeckung verzichtet, gegebenenfalls zusätzlich oder alternativ auch auf eine Wärmeabsorptionsbeschichtung. Für den Fall, dass das Modulelement 1 als Wärmeabgabemittel eingesetzt werden soll, ist es bevorzugt das Modulelement 1 auf einer nicht oder nur zeitweise der Sonnenbestrahlung ausgesetzten Gebäudeseite, insbesondere einer Norddachseite oder einer Nordwandseite anzuordnen, wohingegen es bevorzugt ist, für den Fall der Ausbildung des Modulelementes 1 als Solarthermie-Modulelement oder als Photovoltaik-Modulelement das Modulelement 1 auf einer Sonnenseite, insbesondere einer Südseite eines Gebäudes anzuordnen.

In den Fig. 2a und 2b ist eine bevorzugte Ausführungsform eines als Solarthermie-Modulelement ausgebildeten Modulelementes 1 gezeigt. Zu erkennen ist der umlaufende, rechteckig konturierte Halterahmen 2. In der Schnittdarstellung gemäß Fig. 2 sind die parallel ausgerichteten Profile 4 zu erkennen. In dem gezeigten Ausführungsbeispiel ist der jeweilige Rohrabschnitt 5 unterhalb von zwei spiegelsymmetrisch angeordneten Flachabschnitten 6 angeordnet, wobei die beiden Flachabschnitte 6 einen gemeinsamen Flachabschnitt bzw. eine gemeinsame ebene Fläche (Auflage- bzw. Trägerebene) bilden. Zu erkennen ist weiterhin, dass die Profile 4 in dem gezeigten Ausführungsbeispiel auf Stoß angeordnet sind, derart, dass sich die Längskanten jeweils zweier benachbarter Flachabschnitte berühren.

Unterhalb der Profile 4 befindet sich Wärmedämmmaterial 11, vorzugsweise in der Form von geschäumtem Kunststoff oder Steinwolle od.dgl. Zu erkennen ist ferner, dass auch seitlich der Profile 4 Wärmedämmmaterial 11 angeordnet ist, um die Profile 4 gegenüber den Rahmenprofilen 3 (Rahmenleisten) thermisch zu isolieren. Fig. 2a und 2b ist ferner zu entnehmen, dass sich oberhalb der Profile 4 mit Abstand zu diesen eine transparente, hier als Glasscheibe ausgebildete Abdeckung 12 befindet, um den Wirkungsgrad des Modulelementes 1 zu erhöhen.

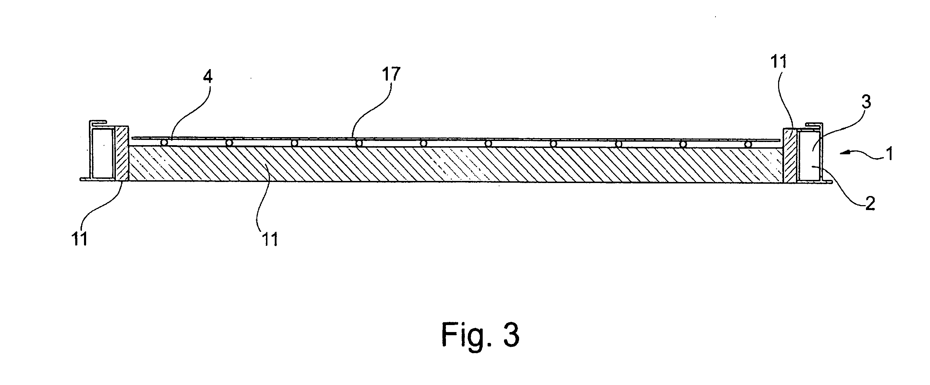

Fig. 3 zeigt in einer geschnittenen Darstellung ein als Photovoltaikmodulelement ausgebildetes Modulelement 1. In Fig. 3 ist ein Halterahmen 2 aus insgesamt vier Rahmenprofilen 3 zu entnehmen, wobei der Halterahmen 2 eine Vielzahl von auf Stoß angeordneten Profilen 4 trägt. Unterhalb der Profile 4 befindet sich Wärmedämmmaterial 11, ebenso wie seitlich der Profile 4, wobei gegebenenfalls vollständig auf Wärmedämmmaterial verzichtet werden kann.

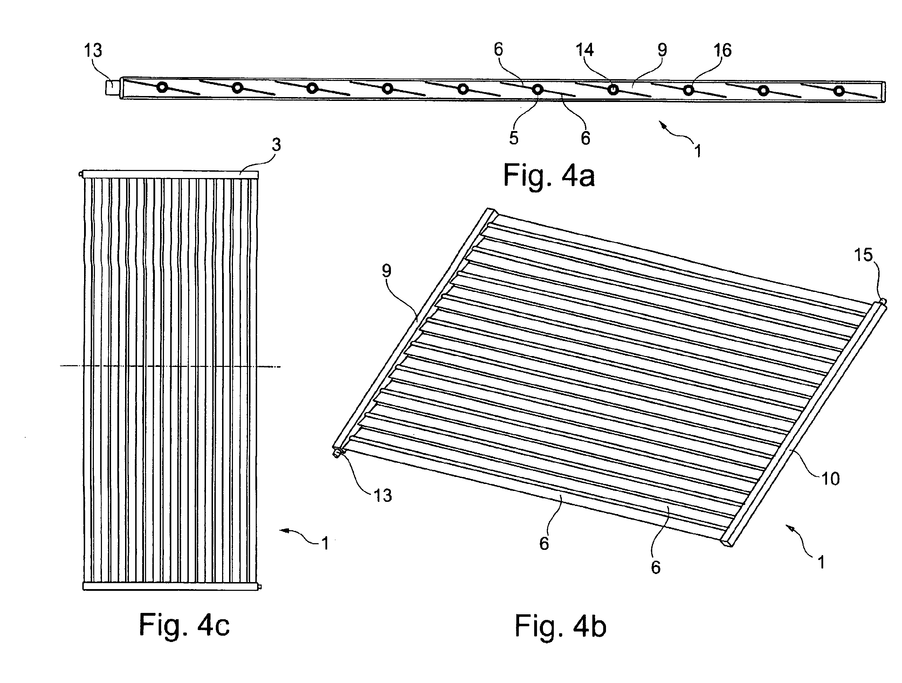

Zu erkennen ist ferner, dass die Profile 4 lediglich schematisch angedeutete photovoltaische Zellen 17 tragen, wobei die photovoltaischen Zellen 17 die Profile 4 überdecken. Es ist auch eine Ausführungsform denkbar, bei der kleinere Einheiten von photovoltaischen Zellen 17 auf die Profile 4 verteilt angeordnet sind, um hierdurch bei einer entsprechenden Anordnung der Profile 4 ein Verschwenken der Profile 4, analog zu dem Ausführungsbeispiel gemäß den Fig. 4a bis 4c zu ermöglichen, um hierdurch einen optimalen Einstrahlwinkel des Sonnenlichtes einstellen zu können.

In den Fig. 4a bis 4c ist ein weiteres alternatives Modulelement 1 in einer unvollständigen Darstellung gezeigt. Das Modulelement 1 ist insofern unvollständig dargestellt, als dass die Darstellung des Halterahmens fehlt, der die Profile 4 und die dargestellte Zulaufsammelleitung 9 sowie die Auslasssammelleitung 10 umschließt. In der Schnittdarstellung gemäß Fig. 4a ist die Zulaufsammelleitung 9 mit einem seitlichen Anschluss 13 zum Zuführen von flüssigem Medium gezeigt.

Aus den Fig. 4a bis 4c ergibt sich, dass die Profile 4 nicht Stoß an Stoß liegen, sondern um die jeweilige Längsmittelachse 14 des zugehörigen Rohrabschnitts 5 verschwenkt sind. Den Profilen 4 ist zum Zwecke des Verschwenkens derselben ein nicht dargestellter Verstellantrieb zugeordnet, vorzugsweise ein elektromotorischer Verstellantrieb, der die Profile 4 um die Längsmittelachse 14 in Abhängigkeit des Sonnenstandes verschwenkt.

Wie sich aus Fig. 4b ergibt, weist auch die Auslasssammelleitung 10 einen Anschluss 15 auf, über die Fluid, insbesondere nach einer Wärmeaufnahme abströmen kann.

Bevorzugt sind die flügelförmig angeordneten Flachabschnitte 6, die jeweils von einem Bogenabschnitt 16 des zugehörigen Profils überragt werden, mit einer Wärmeabsorptionsbeschichtung versehen.

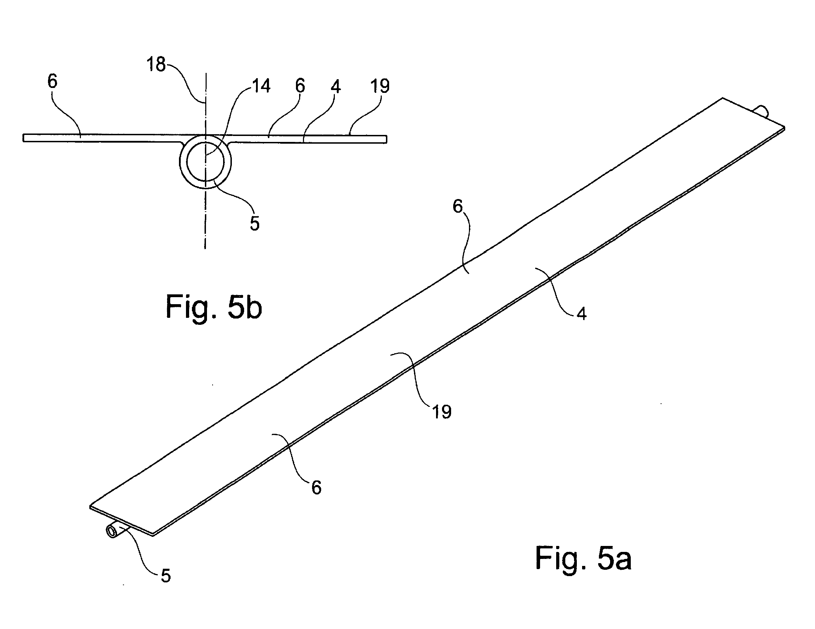

In den Fig. 5a und 5b ist ein erstes Ausführungsbeispiel eines Profils 4, hier eines Leichtmetalllegierungs-Strangpressprofils, zum Aufbau eines Modulelementes gezeigt. Das Profil 4 umfasst in dem gezeigten Ausführungsbeispiel einen kreisrund konturierten Rohrabschnitt 5 mit einer Längsmittelachse 14. Die Längsmittelachse 14 wird durchsetzt von einer Ebene 18 (Symmetrieebene), zu der zwei Flachabschnitte 6, die einteilig mit dem Rohrabschnitt 5 ausgebildet sind, symmetrisch angeordnet sind. Die Flachabschnitte 6 bilden einen gemeinsamen Flachabschnitt mit einer gemeinsamen Auflageebene 19 (Trägerebene), beispielsweise zum Tragen von photovoltaischen Zellen. Für den Fall der Ausbildung eines Modulelementes 1 mit den gezeigten Profilen 4 als Solarthermie-Modulelement hat die Auflageebene 19 in der Regel keine Auflage bzw. Tragfunktion, sondern ist bevorzugt mit einer Wärmeabsorptionsschicht beschichtet.

Zu erkennen ist, dass sich der Rohrabschnitt 5 vollständig unterhalb der gemeinsamen Auflageebene 19 befindet, die Auflageebene 19 und damit die Flachabschnitte 6 also nicht mit einem Bogenabschnitt überragt.

Wie sich aus Fig. 5a ergibt, überragt der Rohrabschnitt 5 axial die Flächenabschnitte 6 und die Auflageebene 19 in axialer Richtung, um ein einfaches Festlegen der Profile 4 an einer in Fig. 5a und 5b aus Übersichtlichkeitsgründen nicht dargestellten zulaufsammelleitung 9 und einer Auslasssammelleitung 10, vorzugsweise durch Aufstecken, oder Aufpressen, etc. festzulegen. Zur Gewährleistung einer ausreichenden Dichtheit kann zusätzlich ein Elastomerdichtelement, beispielsweise ein O-Ring, zur Abdichtung gegenüber den Sammelleitungen verwendet werden.

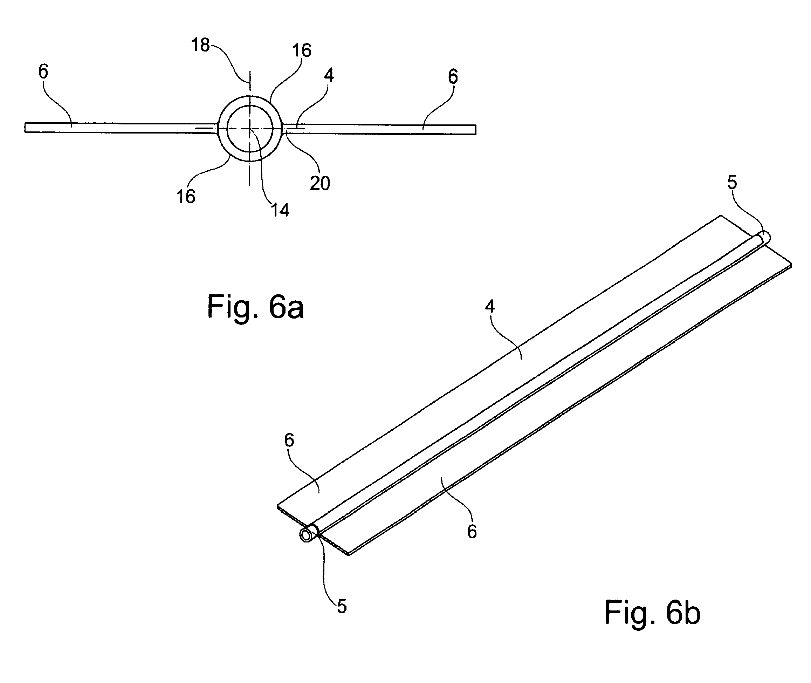

In den Fig. 6a und 6b ist ein alternatives Ausführungsbeispiel eines als Strangpressprofil ausgebildeten Profils 4 aus einer Leichtmetalllegierung, hier eine Aluminiumlegierung gezeigt. Zu erkennen ist, dass zwei symmetrisch zu einer Ebene 18 angeordnete Flachabschnitte 6 vorgesehen sind, die nach oben und nach unten von einem Bogenabschnitt 16 überragt werden. Die Flachabschnitte 6 liegen in dem gezeigten Ausführungsbeispiel in einer zur Ebene 18 rechtwinklig angeordneten Horizontalebene 20, die wie die Ebene 18 die Längsmittelachse 14 in sich aufnimmt.

Auch bei dem Ausführungsbeispiel gemäß den Fig. 6a und 6b überragt der Rohrabschnitt 5 die Flachabschnitte 6 in beide Axialrichtungen.

Bei den Ausführungsbeispielen gemäß den Fig. 5a bis 6b ist gemeinsam, dass die Profile 4 fußabschnittsfrei ausgebildet sind.

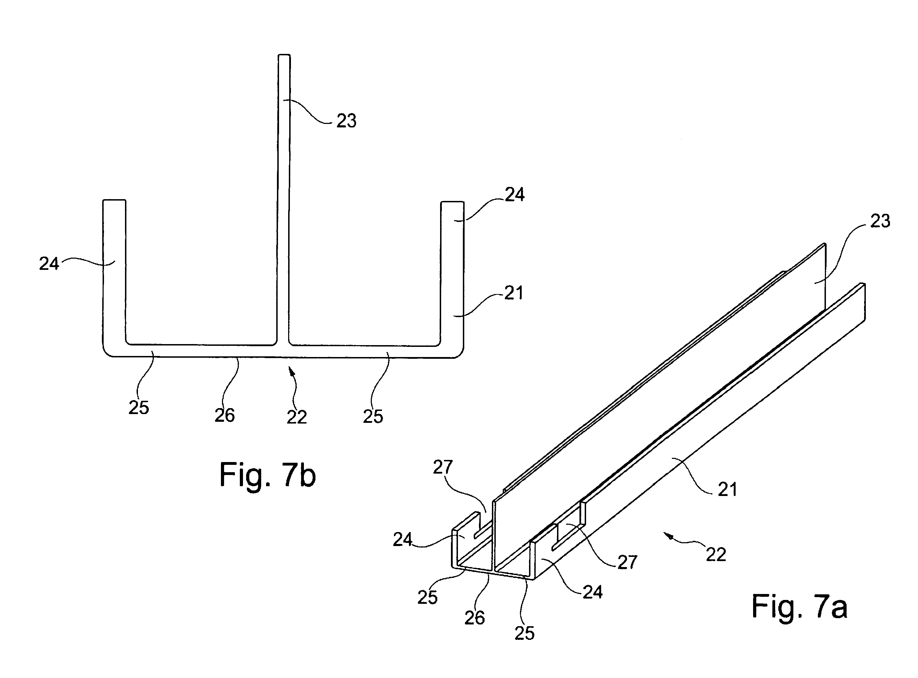

Fig. 7a und 7b zeigen ein erstes Ausführungsbeispiel eines möglichen Trägerprofils 21 einer Trägerstruktur 22 zum Festlegen von Modulelementen. Das Trägerprofil 21 ist spiegelsymmetrisch zu einer Trennebene 23 (Trennschenkel) ausgebildet, die im montierten Zustand zwei benachbarte Modulelemente 1 voneinander trennt. Die von einem Plattenabschnitt gebildete Trennebene 23 verläuft parallel zu zwei Fixierschenkel 24 mit geringer Höhenerstreckung, die jeweils mit der Trennebene 23 ein U bilden, also eine rinnenförmige Ausformung, über die Regenwasser, etc. abströmen kann. Die Fixierschenkel 24 sind einteilig mit der Trennebene 23 über jeweils einen Bodenabschnitt 25 verbunden, wobei die Bodenabschnitte 25 gemeinsam eine Bodenfläche 26 zur Auflage beispielsweise auf einem Dachsparren oder einer Gebäudewand bilden. Die Fixierung kann mittels Schrauben, etc. erfolgen.

In jedem Fixierschenkel 24 sind Ausnehmungen (jeweils nur eine gezeigt) 27 eingebracht, um die Halterahmen von Modulelementen 1 festlegen zu können. Hierzu umfassen die Halterahmen nicht dargestellte Fortsätze, zum Einrasten in die Ausnehmung 27. Die Ausnehmung 27 ist derart konturiert, dass ein Modulelement 1 nach dem Einführen schwerkraftbedingt in eine (untere) Fixierposition hineinrutschen kann, in der es entgegen der Aufsteckrichtung nicht entnommen werden kann. Im montierten Zustand kann bei Bedarf auf die freie Stirnseite der Trennebene 23 ein Abdeckaufsatz aufgesteckt werden, der Regenwasser größtenteils von der von dem Trägerprofil 21 gebildeten Rinnen abhält.

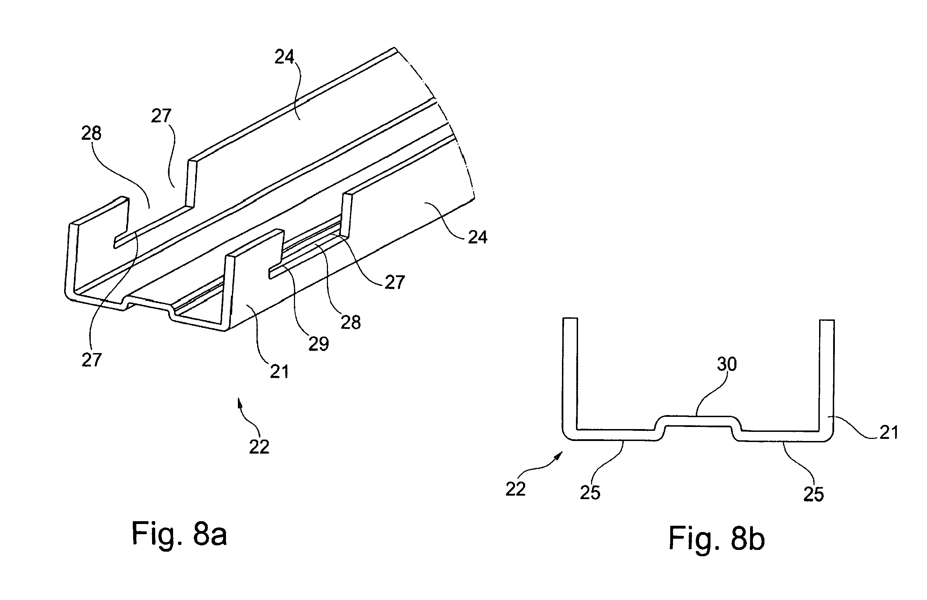

In den Fig. 8a und 8b ist ein alternatives Trägerprofil 21 für eine Trägerstruktur 22 gezeigt. Dieses umfasst im Gegensatz zu dem zuvor beschriebenen Ausführungsbeispiel keine Trennebene 23 und ist daher im Wesentlichen U-förmig konturiert.

Das Trägerprofil 21 umfasst zwei parallele Fixierschenkel 24, die mehrere axial voneinander beabstandete Ausnehmungen 27, von denen jeweils nur eine aus Übersichtlichkeitsgründen dargestellt ist, aufweisen. Die Ausnehmungen 27 umfassen einen im Wesentlichen rechteckigen, oben offenen Einführabschnitt 28 zum Einsetzen eines nicht gezeigten Fortsatzes eines Rahmens. Der Fortsatz weist einen in axialer Richtung des Trägerprofils 21 weisenden Abschnitt auf, der zum vorzugsweise formkongruenten Zusammenwirken mit einem unteren Fixierabschnitt 29 der Ausnehmung 27 ausgebildet ist. Im Gegensatz zum Einführabschnitt 28 ist der Fixierabschnitt 29 nicht oben offen, sondern lediglich seitlich, d.h. nach hinten bzw. oben in Richtung Einführabschnitt 28 geöffnet. Näherungsweise hat die Ausnehmung 27 also eine L-Kontur, vorzugsweise ebenso wie der Fortsatz des Halterahmens 2 der zum Zusammenwirken mit der Ausnehmung 27 ausgebildet ist.

Die Ausnehmungen 27 des in den Fig. 8a und 8b gezeigten Trägerprofils 21 entsprechen hinsichtlich ihrer Ausbildung der Kontur der Ausnehmung 27 bei dem in den Fig. 7a und 7b dargestellten Ausführungsbeispiel.

Wie sich insbesondere aus Fig. 8b ergibt, verlaufen die Bodenabschnitte 25, die die Fixierschenkel 24 miteinander verbinden, in einem inneren Erhebungsabschnitt 30 zusammen, der die Steifigkeit des Trägerprofils 21 erhöht.

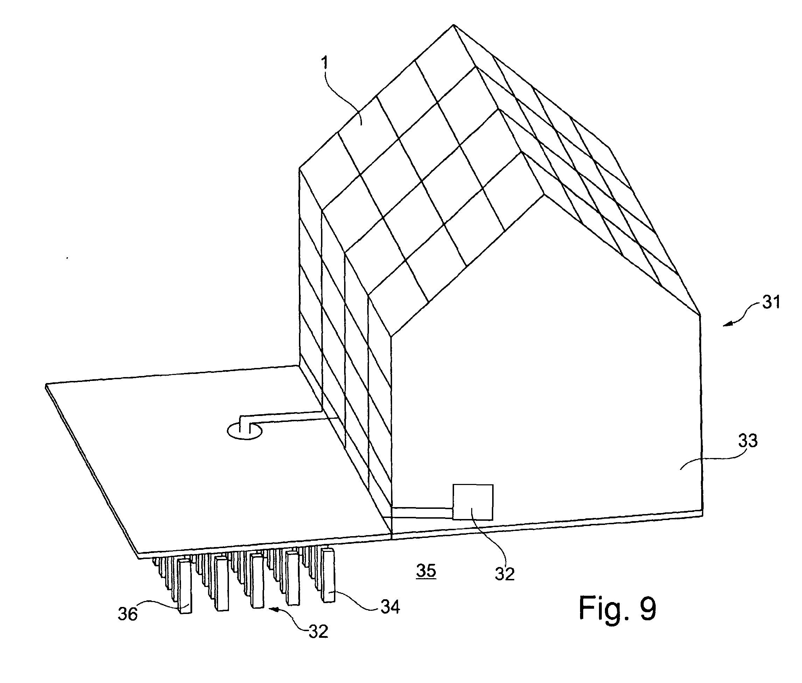

Fig. 9 zeigt ein mögliches Ausführungsbeispiel eines Systems 31, umfassend eine Vielzahl von schematisch als Rechtecke dargestellten Modulelementen 1. Modulelemente 1 sind sowohl auf Dachflächen als auch auf vertikalen Wandflächen angebracht. Im Hinblick auf den Anschluss und die Ausbildung der Modulelemente 1 gibt es unterschiedliche Möglichkeiten. Bei einer ersten Ausführungsform des Systems 1 sind die Modulelemente 1 beispielsweise als Solarthermie-Modulelemente ausgebildet und führen überschüssige Wärme über die Auslasssammelleitungen ab zu mindestens einer Wärmesenke 32, wobei die Wärmesenke 32 beispielsweise von einem schematisch dargestellten Heizkörper innerhalb eines Gebäudes 33 gebildet sein kann und/oder von Wärmeabgabemittel 34, die im Erdboden 35 versenkt sind. Auch für den Fall der Ausbildung der Modulelemente 1 als Photovoltaik-Modulelemente kann überschüssige Wärme zum Zwecke der Kühlung der Modulelemente 1 an Wärmesenken 32, beispielsweise an die Wärmeabgabemittel 34 im Boden abgegeben werden. Bei der mit 32 gekennzeichneten, innerhalb des Gebäudes 33 angeordneten Wärmesenke kann es sich beispielsweise auch um einen Teil einer Absorptionskälteanlage handeln. Zu Abtauzwecken können die Modulelemente 1 auch mit erwärmter Flüssigkeit versorgt werden, wobei die Wärme beispielsweise aus dem Erdboden 35 entnommen werden kann, wobei in diesem Fall die Wärmeabgabemittel 34 Wärmeaufnahmemittel 36 bilden. Auch ist eine Kühlung von auf beispielsweise der Süddachseite angeordneten, als Photovoltaik-Modulelementen ausgebildeten Modulelementen 1 über Modulelemente 1 denkbar, die beispielsweise auf einer Norddachseite, jedenfalls auf einer weniger stark der Sonnenbestrahlung ausgesetzten Seite des Gebäudes, angeordnet sind. Über diese Modulelemente 1 kann dann die überschüssige Wärme von den Photovoltaik-Modulelementen der Südseite abgegeben werden.

## Patentansprüche

1. Profilanordnung, umfassend mindestens zwei Profile (4) mit jeweils mindestens einem eine Zulauföffnung (7) und eine Auslassöffnung (8) aufweisenden Rohrabschnitt (5) und jeweils mindestens einem Flachabschnitt (6), wobei die Eingangsöffnungen an eine Zulaufsammelleitung (9) und die Auslassöffnungen (8) an eine Auslasssammelleitung (10) angeschlossen sind,
**dadurch gekennzeichnet,**
**dass** die Profilanordnung als Modulelement (1) mit einem die Profile (4) tragenden Halterahmen (2) ausgebildet ist.

2. Profilanordnung nach Anspruch 1
**dadurch gekennzeichnet,**
**dass** die Profile (4) und/oder der, vorzugsweise aus Rahmenprofilen (3) aufgebaute, Halterahmen (2) aus einem Leichtmetallwerkstoff, insbesondere einer Aluminiumlegierung, ausgebildet sind/ist.

3. Profilanordnung nach einem der Ansprüche 1 oder 2,
**dadurch gekennzeichnet,**
**dass** die Profile (4) jeweils zwei, vorzugsweise spiegelsymmetrisch zu einer eine Rohrabschnittlängsmittelachse schneidenden Ebene (18) angeordnete, Flachabschnitte (6) umfassen.

4. Profilanordnung nach einem der vorhergehenden Ansprüche,
**dadurch gekennzeichnet,**
**dass** die Profile (4) fußabschnittsfrei sind.

5. Profilanordnung nach einem der vorhergehenden Ansprüche,
**dadurch gekennzeichnet,**
**dass** unterhalb der Profile (4) Wärmedämmmaterial (11), insbesondere geschäumter Kunststoff oder Steinwolle, angeordnet ist.

6. Profilanordnung nach einem der vorhergehenden Ansprüche,
**dadurch gekennzeichnet,**
**dass** die Profile (4), vorzugsweise auf einer Profiloberseite, mit mindestens einer, vorzugsweise mindestens ein Ormocer umfassenden, Wärmestrahlungsabsorptionsschicht, versehen sind.

7. Profilanordnung nach einem der vorhergehenden Ansprüche,
**dadurch gekennzeichnet,**
**dass** die Profile (4), vorzugsweise um eine Längsmittelachse (14) des jeweiligen Rohrabschnittes (5), verschwenkbar sind, insbesondere mittels eines Verschwenkantriebs.

8. Profilanordnung nach Anspruch 7,
**dadurch gekennzeichnet,**
**dass** dem Verschwenkantrieb eine den Verschwenkantrieb in Abhängigkeit des Sonnenstandes ansteuernd ausgebildete Steuereinrichtung zugeordnet ist.

9. Profilanordnung nach einem der vorhergehenden Ansprüche,
**dadurch gekennzeichnet,**
**dass** oberhalb der Profile (4) eine für einen Sonnenlichtspektralbereich zumindest abschnittsweise transparente Abdeckung (12), insbesondere eine Glasscheibe, angeordnet ist.

10. Profilanordnung nach einem der vorhergehenden Ansprüche,
**dadurch gekennzeichnet,**
**dass** eine Oberseite der Flachabschnitte (6) eine mindestens eine photovoltaische Zelle (17) tragende Tragfläche ist.

11. Profilanordnung nach einem der vorhergehenden Ansprüche,
**dadurch gekennzeichnet,**
**dass** die Rohrabschnitte (5) fluiddurchströmt sind.

12. Profilanordnung nach einem der vorhergehenden Ansprüche,
**dadurch gekennzeichnet,**
**dass** der Halterahmen (2) Befestigungsmittel zum, insbesondere formschlüssigen, Festlegen an einer Tragstruktur umfasst.

13. Profilanordnung nach einem der vorhergehenden Ansprüche,
**dadurch gekennzeichnet,**
**dass** sich der Rohrabschnitt (5) vollständig unterhalb einer ebenen, von dem mindestens einen Flachabschnitt (6) gebildeten Ebene (18) befindet, oder diese abschnittsweise, vorzugsweise mittels eines Bogenabschnitts (16), überragt.

14. System, umfassend mindestens eine als Modulelement (1) ausgebildete Profilanordnung nach einem der vorhergehenden Ansprüche, wobei der Halterahmen (2) des Modulelementes (1) an einer Trägerstruktur, insbesondere lösbar, festgelegt ist.

15. System nach Anspruch 14,
**dadurch gekennzeichnet,**
**dass** die Trägerstruktur auf einem Gebäudedach, insbesondere mindestens einem Dachsparren und/oder an einer Gebäudewand angeordnet ist.

16. System nach einem der Ansprüche 14 oder 15,
**dadurch gekennzeichnet,**
**dass** die Auslasssammelleitung (10) zum Abführen von Wärme mit einer Wärmesenke (32), insbesondere einem Heizungssystem und/oder einem Warmwassererzeuger, vorzugsweise in einem Gebäude (33) und/oder mit zumindest abschnittsweise im Erdboden (35) angeordneten Wärmeabgabemitteln (34) und/oder mit auf einem Gebäudedach, vorzugsweise auf einer Norddachseite, oder an einer Gebäudewand angeordneten, insbesondere ein Profilanordnung umfassenden, Wärmeabgabemitteln (34) und/oder mit einem, vorzugsweise mindestens eine eine photovoltaische Zelle (17) tragenden, Modulelement (1) verbunden und/oder Teil einer Adsorptionskälteeinrichtung ist.

17. System nach einem der Ansprüche 14 bis 16, **dadurch gekennzeichnet,**
**dass** die Zulaufsammelleitung (9) mit einer Wärmequelle, beispielsweise mit zumindest abschnittsweise im Erdboden (35) angeordneten Wärmeaufnahmemitteln (36), verbunden ist.
